# DEMANDE DE BREVET EUROPEEN

(11) **EP 2 505 718 A1**
(43) Date de publication de la demande: **03.10.2012**
(21) Numéro de dépôt: 12305358.9
(22) Date de dépôt: 28.03.2012
(51) Int. Cl.: E02D 5/80, E02D 17/20, A01G 13/02

(54) **Dispositif de maintien de toiles de propreté dans les espaces verts**

(30) Priorité: 30.03.2011 FR 1152619
(71) Demandeur: BTC Participation, 16230 Mansle (FR)
(72) Inventeur: Fertin, Jérôme, Philippe, Jacques, 16720 Saint Même les Carrières (FR)
(74) Mandataire: Cenatiempo, Julie Adeline Anne

(57) **Abrégé**

L'objet de l'invention est un dispositif de maintien d'une toile de propreté, notamment dans un espace vert, caractérisé en ce qu'il comprend une tête (10), avec des moyens (14) de placage surfacique, sous forme d'une corolle, un pied (12) solidaire de ladite tête, ledit pied étant muni d'au moins une hélice sur au moins une partie de sa longueur de façon à pénétrer à travers la toile et à visser dans le sol en exerçant un effort de retenue de façon à plaquer lesdits moyens (14) de placage surfacique sur ladite toile de propreté.

## Description

La présente invention concerne un dispositif de maintien de toiles de propreté dans les espaces verts mais aussi les films de paillage.

Les ouvrages d'art, les bas-côtés autoroutiers, les massifs de jardin, les lieux publics sont de plus en plus arborés et traités en espaces verts maîtrisés plutôt que laissés en jachère.

On prendra comme application les talus de bords de voies rapides routières telles que les autoroutes et voies ferrées ainsi que les dispositifs liés à l'aménagement des territoires comme les jardins, les ronds-points, les talus.

Il est bien entendu que toute la description qui va suivre trouve application en tout lieu où il convient de maintenir au sol des toiles dite de propreté ou des films de paillage.

On entend par toile de propreté des toiles en matériaux tissés ou non tissés qui sont mises sur le sol après que celui-ci a été préparé pour recevoir des plantations.

Ainsi, le sol est retourné, aéré, amendé si cela est nécessaire, voire doté d'un réseau d'alimentation en eau ou au moins de piquages localisés permettant d'arroser ces plantations en cas de fortes chaleurs et au moins quand les plants sont jeunes.

Une fois le sol préparé, une toile en matériau tissé ou non tissé est disposée au sol.

Cette toile est donc perméable à l'eau de façon à laisser passer l'eau de pluie, sans former de poches de rétention. La maille est telle que le soleil ne traverse pas si bien que le sol ne reçoit pas de soleil directement, ni même de lumière.

Par contre, une telle toile permet de limiter !'évaporation en période chaude et de limiter la montée en température du sol mais aussi de limiter la descente en température dudit sol durant les périodes froides.

Cette toile assure aussi une fonction anti-érosion en supprimant le ravinement lié aux pluies.

On comprend aussi que la toile assure une fonction barrière à l'évaporation lorsqu'il y a du vent qui ne dessèche plus la surface du sol.

Cette toile n'est par contre aucunement étanche aux gaz si bien qu'elle permet les échanges gazeux et notamment les racines dans le sol peuvent échanger.

Le bénéfice principal de l'apposition d'une telle toile est d'empêcher les mauvaises herbes de pousser.

En effet, la suppression de la lumière ne permet pas aux graines à la surface du sol de germer et encore moins de croître. Les graines disséminées par le sol ne peuvent d'ailleurs même pas rejoindre le sol pour s'y implanter.

Les plantes et arbustes qui sont mis en terre à travers la toile n'ont aucun problème puisqu'ils disposent de leurs feuilles situées au-dessus de la toile, de leur ramure pour la photosynthèse.

De plus, comme les nutriments du sol ne sont pas consommés par les mauvaises herbes, les plantes et arbustes profitent mieux et se développent rapidement. Ces toiles présentent donc l'avantage de limiter les entretiens et donc les coûts en plus de tous les autres avantages périphériques.

Par contre, ces toiles de très grande surface sont uniquement posées sur le sol et soumises aux aléas climatiques et donc aux effets mécaniques du vent.

Si, en tout dernier lieu, les plantations peuvent les retenir pour qu'elles ne s'envolent pas avec le vent, il est nécessaire de les fixer au sol.

On connaît différents dispositifs pour fixer les toiles au sol.

Le plus simple est constitué d'arceaux en fil de fer de diamètre de 5mm pour donner un ordre d'idée, du type rond à béton, pliés en U. Le U est retourné et les deux branches sont enfoncées à travers la toile et dans le sol.

Le premier constat est que l'ancrage au sol est extrêmement limité. De plus la pose n'est pas aisée car il faut appuyer, certaines fois en exerçant un effort important sur la base du U. Celui-ci a tendance à s'ouvrir, les branches s'écartent et la mise en place est ratée.

D'autre part, le maintien de la toile n'est pas efficace car la surface de contact est très limitée et des déchirements de la toile peuvent survenir avec les mouvements répétés de la toile sous l'effet du vent autour de ce faible diamètre de fil de fer.

Ces fers ont aussi l'inconvénient de rouiller, ce qui n'est pas toujours esthétique et d'être lourd lorsqu'il faut en transporter un grand nombre.

De plus, ils présentent un risque de blessures par leur pointe ainsi que d' infection tétanique lorsqu' ils sont rouillés, ce qui est préjudiciable à un usage en espaces verts.

On note également qu'il faut impérativement travailler baissé ou au moins accroupi et les opérateurs n'effectuent donc pas les opérations dans les meilleures conditions ergonomiques, surtout lorsque le terrain présente une pente importante.

Une autre solution consiste à remplacer ces agrafes en U par des agrafes de conception améliorée en matière plastique recyclable comme du polyéthylène. Ces agrafes en U sont alors moulées et présentent sur leurs branches des ardillons qui assurent un meilleur ancrage dans le sol.

De plus, sur la base, il est prévu une surface plane de façon à pouvoir exercer un effort avec le pied.

Il y a une amélioration limitée puisque le poids de chaque agrafe est réduit, l'effort peut être exercé au pied mais il faut toujours positionner l'agrafe en s'accroupissant, l'ancrage reste faible et le maintien de la toile au sol est de faible surface.

Des agrafes simples sont aussi proposées dans la demande de brevet français FR2 869 197 qui illustre parfaitement l'art antérieur des agrafes de paillage à enfoncer.

On connaît aussi par la demande de brevet EP 2 253 761 des pions de fixation de deux toiles entre elles afin de réaliser une très grande surface monolithique. Ces pions sont sous forme de vis avec une tête, le corps de vis traversant la double épaisseur de toile et assurant la liaison dans la zone de superposition des deux portions de toile juxtaposées, avec une zone de recouvrement.

Néanmoins cette demande ne prévoit aucunement des vis aptes à être enfoncées à travers la toile et dont le corps vissant aurait la possibilité technique de pénétrer dans le sol et de retenir la dite toile au sol.

Le but de la présente invention est d'apporter une modification radicale des agencements de l'art antérieur en palliant les inconvénients précités.

Le dispositif selon la présente invention, en plus d'améliorer fortement les propriétés mécaniques de l'ancrage, permet aux opérateurs de travailler dans des conditions d'ergonomie très satisfaisantes.

Le dispositif selon la présente invention est maintenant décrit en détail selon un mode de réalisation particulier, non limitatif, en regard des dessins annexés, dessins sur lesquels les différentes figures représentent :
- Figure 1 : une vue en perspective du dispositif selon l'invention dans la forme retenue,
- Figure 2 : une vue en élévation latérale,
- Figure 3 : une vue en coupe par un plan médian longitudinal
- Figure 4 : une vue d'un opérateur lors de la mise en place d'un dispositif.

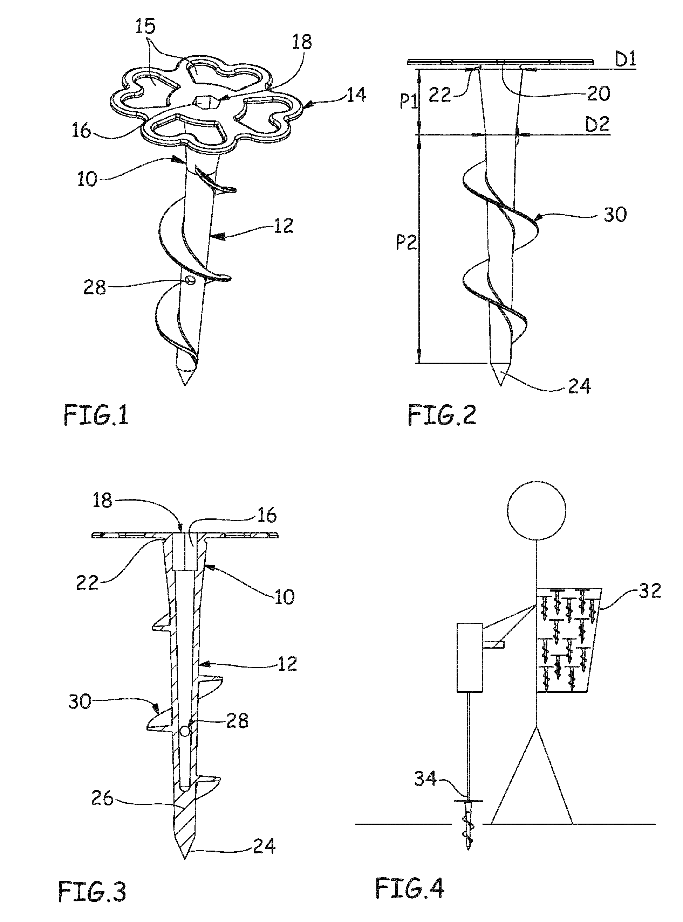

Sur la figure 1, on a représenté un dispositif selon la présente invention qui comprend une tête 10 et un pied 12.

La tête 10 comporte des moyens 14 de placage surfacique sous forme d'une corolle, s'inscrivant en l'occurrence sensiblement dans un cercle.

Cette corolle a une forme de trèfle à quatre feuilles mais ceci n'est bien sûr que pour donner un caractère esthétique au produit final.

Cette corolle 14 couvre environ une surface correspondant à un disque de 5 à 10 cm de diamètre pour donner un ordre d'idée. L'épaisseur est de l'ordre de 2 à 4 millimètres pour donner un ordre d'idée, le but étant seulement d'obtenir une certaine raideur apte à retenir la toile comme il sera indiqué ci-après en évitant tout pliage, ceci pour le diamètre donné compris entre 5 et 10 cm.

Cette corolle est avantageusement ajourée avec des lumières 15, ce qui permet un gain de matière, donc de poids, ainsi qu'un meilleur maintien comme il sera expliqué plus avant dans la description.

La corolle 14 est munie en son centre d'un trou 16 dont l'axe longitudinal est confondu avec l'axe longitudinal du dispositif et donc du pied 12.

Ce trou 16 comprend une empreinte 18. Cette empreinte présente une légère contre dépouille.

La corolle 14 est solidaire du pied 12 par une zone de jonction 20. Cette zone est munie d'une gorge 22, périphérique, circulaire.

La partie haute P1, du pied, sensiblement 1/4 de la hauteur totale du pied pour donner un ordre de grandeur, à partir de la jonction 20, est de forme tronconique avec un diamètre D1 supérieur au diamètre D2. La hauteur du pied pour donner là aussi un rapport et une idée des dimensions du produit est comprise entre 10 et 20 cm soit un ratio de l'ordre de 2 à 4 entre le diamètre de la corolle et la hauteur du pied.

Cette partie haute P1 du pied est creuse et le trou 16, initié dans la corolle 14, se prolonge en son sein sur une moitié de sa hauteur pour donner un ordre d' idée, soit donc 1/8 de la hauteur totale du pied.

Le trou 16 dans la partie haute P1 conserve le profil de l'empreinte 18 initiale. La zone P2 du pied 12 est également de forme tronconique mais avec une conicité plus faible, se terminant par une pointe 24.

Cette zone P2 du pied 12 est également creuse sauf sa partie 26 extrémale qui est pleine ainsi que la pointe 24. La pointe est ainsi renforcée pour permettre une pénétration dans le sol en subissant l'appui exercé par l'opérateur, comme il sera expliqué plus avant lors de la description de la mise en oeuvre.

On note également la présence d'un perçage 28 d'évacuation d'eau dont l'utilité sera précisée.

Cette zone P2 est également munie d'une hélice 30, en saillie sur la face extérieure du pied.

Cette hélice 30 prend naissance au droit du passage de la zone P1 à la zone P2. Cette hélice présente un pas constant et un diamètre constant nonobstant le fait que le pied lui-même est tronconique.

La largeur de l'hélice est sensiblement égale au diamètre moyen du pied 12, mesuré dans sa zone P2.

Ainsi l'hélice génère un diamètre apparent de 3 fois le diamètre du pied pris dans sa zone P2.

L'hélice 30 s'amenuise pour mourir en amont immédiat de la pointe 24.

L'hélice dans le mode de réalisation représenté comprend deux tours.

Ce pas est prévu d'une part pour assurer parfaitement la pénétration dans le sol d'une zone planté, c'est-à-dire dans une terre meuble ou tassée, avec ou sans beaucoup de cailloux et d'autre part pour générer un ancrage car comme il est bien connu, un pas de vis assure un effort de retenue sur une zone de terre très supérieure à celle de la zone de pénétration de la vis, ce qui permet de dire qu'il est constitué un ancrage.

Le dispositif est avantageusement directement venu de moulage pour constituer une pièce monolithique, de préférence en matière bioplastique ou en polyéthylène. De façon préférentielle, le matériau pourra être en matériau recyclable à partir de bio-polymère dit PLA, PolyLactic Acid avec éventuellement des charges en matériaux naturels tels que chanvre, bois, talc.

Le dispositif selon l'invention est mis en oeuvre de la façon suivante.

Le sol ayant été préparé et la toile à fixer au sol ayant été déployée, dans le mode préféré de l'invention, l'opérateur est équipé d'un contenant 32 utilisé comme réserve de dispositifs.

De plus, il est muni d'un outil du type perceuse sur accus. Cette perceuse est équipée dans son mandrin d'une tige 34 dont l'extrémité présente un profil conjugué de celui de l'empreinte 18. On choisira une vitesse de rotation lente pour ajuster le vissage et le dispositif peut aussi être muni d'un limiteur de couple pour éviter toute dégradation de la toile au vissage.

L'opérateur encliquette un dispositif en faisant pénétrer l'extrémité de profil complémentaire dans l'empreinte 18. La contre dépouille assure cet encliquetage. L'encliquetage permet de retenir un dispositif et donc de retenir au moins le poids dudit dispositif mais une traction manuelle assure aisément un désencliquetage.

L'opérateur vise le point de positionnement retenu pour un dispositif. De ce fait, il place la pointe 24 sur le point de positionnement.

L'opérateur appuie la pointe qui du fait de sa forme, de sa dureté et de l'effort de pression exercé par l'utilisateur perce la toile aisément. L'opérateur reste debout sans avoir besoin de se plier, de se courber, de s'accroupir pendant l'opération de pointage.

La pointe étant en matière plastique pleine est d'une dureté suffisante pour pénétrer et résister aux efforts mécaniques.

Lorsque la pointe a amorcé le perçage de la toile, l'opérateur met en route la perceuse qui fait tourner la tige et donc le dispositif sur lui-même tout en maintenant la pression exercée, ne serait-ce que par le poids de la perceuse en plus de l'effort supplémentaire exercé par l'opérateur. Dès lors, l'hélice assure une pénétration et donc un vissage dans le sol si bien que le dispositif s'enfonce, sans déchirer la toile car l'hélice coupe en un seul endroit.

L'hélice entre dans le sol et sensiblement après deux tours sur lui-même, le dispositif s'est enfoncé dans le sol et vient plaquer le dessous de la corolle sur la toile.

L' hélice disparaît dans le sol et la partie supérieure P1 du pied 12, exempte d'hélice, pénètre alors en force dans le sol et bloque la toile à la périphérie dudit pied.

On constate que la corolle appuie sur la toile avec une surface d'appui importante. Autour de l'hélice, la terre est nécessairement fortement compactée, ce qui améliore encore l'ancrage.

L'opérateur tire et désencliquette aisément la tige de la perceuse qui est alors prête pour une nouvelle pose.

On sait que lorsqu'une hélice pénètre dans le sol, l'accroche est très supérieure à celle d'un fil de fer donc d'une tige cylindrique droite, dont la seule résistance est celle des forces de frottement tandis que la résistance du dispositif selon la présente invention est celle du cône de terre virtuel issu de l'extrémité de la pointe 24 vers la surface, avec une ouverture à 45, très supérieure à celle de la vis.

L'ancrage du dispositif selon la présente invention est très importante, eu égard au poids et aux dimensions du dispositif.

De façon complémentaire, on peut lier les dispositifs ancrés en terre les uns avec les autres au moyen d'un lien comme un cordonnet.

Ce cordonnet est entouré autour de chaque pied dans la zone de jonction, dans la gorge 22 périphérique, circulaire, sous la corolle et se prolonge de façon continue d'un dispositif à un autre.

Ce cordonnet assure ainsi un placage de la toile entre les dispositifs et une consolidation de l'ancrage.

La toile ne peut pas se soulever et le trou dans la toile autour des pieds ne se déchire pas car elle est plaquée par la corolle. On note aussi que les lumières 15 ménagées dans la corolle permettent de verrouiller la toile lorsque la corolle appuie sur ladite toile. L'opérateur devra donc prendre la précaution d'interrompre la rotation de la perceuse à temps.

Le perçage 28 permet d'évacuer l'eau éventuelle accumulée dans la partie creuse intérieure du pied.

Il est également possible en variante de prévoir deux hélices parallèles ou une hélice avec une largeur croissante ou décroissante.

## Revendications

1. Dispositif de maintien d'une toile de propreté, notamment dans un espace vert, **caractérisé en ce qu'**il comprend une tête (10), avec des moyens (14) de placage surfacique, sous forme d'une corolle, un pied (12) solidaire de ladite tête, ledit pied étant muni d'au moins une hélice sur au moins une partie de sa longueur de façon à pénétrer à travers la toile et à visser dans le sol en exerçant un effort de retenue de façon à plaquer lesdits moyens (14) de placage surfacique sur ladite toile de propreté.

2. Dispositif de maintien selon la revendication 1, **caractérisé en ce que** la corolle des moyens (14) de placage surfacique est munie en son centre d'un trou (16).

3. Dispositif de maintien selon la revendication 2, **caractérisé en ce que** le trou (16) comprend une empreinte (18).

4. Dispositif de maintien selon l'une quelconque des revendications précédentes, **caractérisé en ce qu'**il comprend une zone de jonction (20), munie d'une gorge (22), périphérique, circulaire.

5. Dispositif de maintien selon l'une quelconque des revendications précédentes, **caractérisé en ce que** le pied (12) comprend une partie P2 de forme tronconique qui porte la au moins une hélice (30) en saillie sur la face extérieure, le pas étant adapté pour assurer simultanément une pénétration et un ancrage dans le sol.

6. Dispositif de maintien selon la revendication 5, **caractérisé en ce que** la partie P2 du pied (12) se termine en partie inférieure par une pointe (24).

7. Dispositif de maintien selon l'une quelconque des revendications précédentes, **caractérisé en ce que** le pied (12) comprend une partie P1 de forme tronconique, exempte d'hélice.

8. Dispositif de maintien selon la revendication 3 et 7, **caractérisé en ce que** l'empreinte (18) se prolonge dans la partie P1.

9. Dispositif selon l'une quelconque des revendications précédentes, **caractérisé en ce que** le pied (12) est creux sauf sa partie extrémale qui est pleine.

10. Dispositif selon l'une quelconque des revendications précédentes, **caractérisé en ce que** la longueur du pied est comprise entre 10 et 20 cm et le diamètre de la corolle est compris entre 5 et 10 cm.

11. Utilisation du dispositif selon l'une quelconque des revendications 3 ou 8 avec une tige dont l'extrémité est de profil conjugué de celui de l'empreinte (18), ladite tige étant solidaire d'une perceuse de façon à visser ledit dispositif dans le sol, à travers la toile et à maintenir la toile de propreté plaquée au sol.
